# FASCICULE DE BREVET EUROPEEN

(11) **EP 2 631 522 B1**
(45) Date de publication et mention de la délivrance du brevet: **15.10.2014**
(21) Numéro de dépôt: 13156155.7
(22) Date de dépôt: 21.02.2013
(51) Int. Cl.: F16L 39/00, G21C 19/16, F16L 19/02, F16L 39/06, G01K 1/14, G21C 17/112, F16L 19/00

(54) **Ensemble comprenant un premier conduit et un deuxième conduit raccordés par un dispositif de raccordement**
Anordnung, die aus einer ersten Leitung und einer zweiten Leitung besteht, die über eine Anschlussvorrichtung verbunden sind
Assembly comprising first and second conduits connected by a coupling device

(30) Priorité: 24.02.2012 FR 1251723
(43) Date de publication de la demande: 28.08.2013
(73) Titulaire: Areva NP, 92400 Courbevoie (FR)
(72) Inventeur: Cahouet, Laurent, 71150 Chaudenay (FR); Buchot, Frédéric, 71380 Epervans (FR)
(74) Mandataire: Domenego, Bertrand

(56) Documents cités:
- EP-A2- 0 292 164
- FR-A- 1 479 524
- US-A- 2 438 679

## Description

La présente invention concerne un premier conduit et un deuxième conduit raccordés par un dispositif de raccordement, en particulier un premier conduit de guidage de thermocouple et un deuxième conduit de guidage de thermocouple d'un réacteur nucléaire raccordés au travers d'une plaque support du réacteur nucléaire.

FR 1 479 524 divulgue un dispositif de raccordement de tubes.

Les réacteurs nucléaires à eau sous pression (ou réacteurs PWR pour « Pressurized Water Reactor » en anglais) comportent une cuve et, à l'intérieur de la cuve, un coeur de réacteur nucléaire constitué d'assemblages de combustible et des équipements internes.

Les équipements internes supportent les assemblages de combustible dans le coeur, assurent leur positionnement et permettent de contrôler la réaction nucléaire et l'extraction de chaleur.

Les équipements internes comprennent des équipements internes supérieurs situés au-dessus du coeur et des équipements internes inférieurs situés au-dessous du coeur.

Les équipements internes supérieurs comportent une plaque supérieure de coeur au contact sur les extrémités supérieures des assemblages de combustible, une plaque support disposée au-dessus de la plaque supérieure de coeur en étant espacée de celle-ci, et des colonnes entretoises s'étendant verticalement entre la plaque supérieure de coeur et la plaque support.

Les équipements internes supérieurs comprennent des guides de grappe pour guider des grappes de commande comprenant des crayons absorbants renfermant un matériau absorbant les neutrons. Les guides de grappe s'étendent verticalement entre la plaque supérieure de coeur et la plaque support, et se prolongent au-dessus de la plaque support. Pour contrôler la réaction nucléaire, les grappes de commande sont déplacées verticalement de manière que leurs crayons absorbants soient introduits sur une hauteur plus ou moins importante à l'intérieur de certains assemblages de combustible.

Les équipements internes supérieurs comprennent des conduits de guidage pour l'insertion de thermocouples à l'intérieur de la cuve pour mesurer la température de l'eau de refroidissement en sortie d'un ensemble d'assemblages de combustible présélectionnés.

Il est possible de prévoir des conduits de guidage supérieurs s'étendant chacun entre le couvercle et la plaque support, et des conduits de guidage inférieurs s'étendant chacun entre la plaque support et la plaque supérieure de coeur, chaque conduit de guidage supérieur étant raccordé à un conduit de guidage inférieur au travers de la plaque support.

Les thermocouples et les conduits de guidage sont soumis à un environnement particulièrement agressif compte tenu de la réaction nucléaire et des températures élevées régnant dans la cuve du réacteur nucléaire et de la présence de l'eau. En outre, il existe un risque d'endommagement des conduits de guidage lors d'opérations de maintenance du réacteur nucléaire, nécessitant par exemple le remplacement d'un conduit de guidage supérieur.

Aussi, il est souhaitable de pouvoir raccorder facilement un conduit de guidage supérieur à un conduit de guidage inférieur.

Un des buts de l'invention est de proposer un ensemble comprenant un premier conduit et un deuxième conduit raccordés par un dispositif de raccordement, qui soit simple, fiable et qui puisse être mise en oeuvre facilement.

A cet effet, l'invention propose un dispositif de raccordement selon les revendications 1 à 11. L'invention concerne également un ensemble selon les revendications 12 à 15 et un réacteur selon la revendication 16.

L'invention et ses avantages seront mieux compris à la lecture de la description qui va suivre, donnée uniquement à titre d'exemple, et faite en référence aux dessins annexés, sur lesquels :
- la Figure 1 est une vue schématique en coupe de la partie supérieure d'un réacteur nucléaire comprenant un dispositif de guidage de thermocouple ;
- la Figure 2 est une vue en coupe axiale du dispositif de guidage de thermocouple ; et
- la Figure 3 est une vue de dessus du dispositif de guidage de la figure 2.

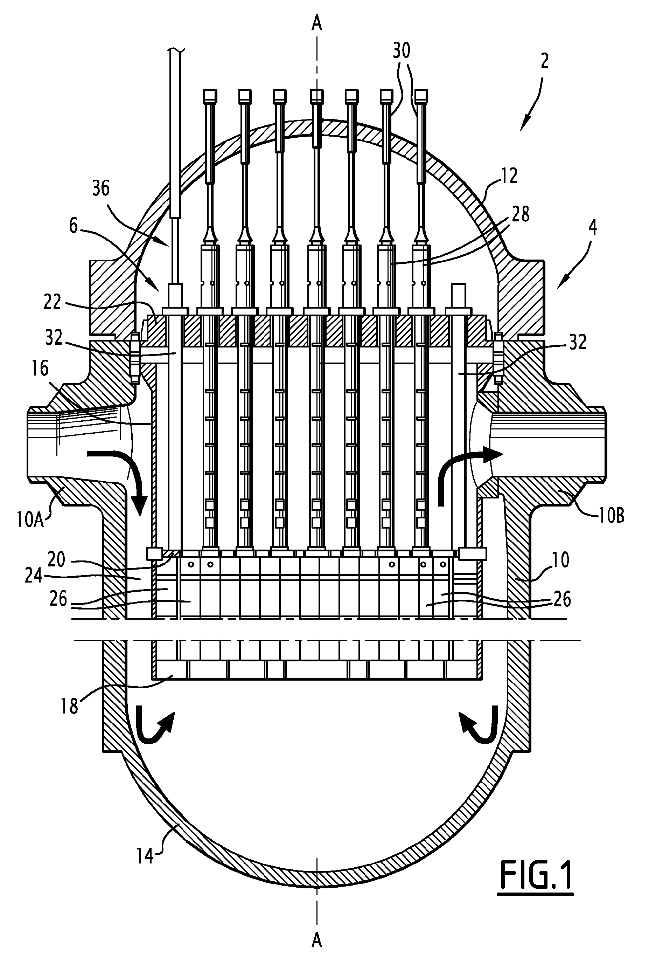

Tel qu'illustré sur la Figure 1, le réacteur 2 nucléaire comprend une cuve 4, et un coeur de réacteur 6 et des équipements internes 8 disposés à l'intérieur de la cuve 4.

La cuve 4 comprend un corps de cuve 10 tubulaire s'étendant suivant un axe de cuve A-A, un couvercle de cuve 12 hémisphérique fermant l'extrémité axiale supérieure du corps de cuve 6, et un fond de cuve 14 hémisphérique fermant l'extrémité axiale inférieure du corps de cuve 10.

Les équipements interne 8 comprennent une enveloppe de coeur 16 tubulaire coaxiale au corps de cuve 10 et une plaque inférieure de coeur 18, une plaque supérieure de coeur 20 et une plaque support 22 s'étendent chacune en travers de l'enveloppe de coeur 16 en étant espacées axialement suivant l'axe de cuve A-A.

L'enveloppe de coeur 16 délimite avec le corps de cuve 10 un espace intermédiaire 24 annulaire.

Le corps de cuve 10 comprend une tubulure d'entrée 10A pour l'entrée du fluide de refroidissement et une tubulure de sortie 10B pour la sortie du fluide de refroidissement. La tubulure d'entrée 10A débouche dans l'espace intermédiaire 24 annulaire délimité entre le corps de cuve 10 et l'enveloppe de coeur 6. La tubulure de sortie 10B s'alimente à l'intérieur de l'enveloppe de coeur 6.

La plaque inférieure de coeur 18 est disposée à l'extrémité inférieure de l'enveloppe de coeur 16. La plaque support 22 est disposée à l'extrémité supérieure de l'enveloppe de coeur 16. La plaque supérieure de coeur 20 est disposée axialement entre la plaque inférieure de coeur 18 et la plaque support 22.

La plaque inférieure de coeur 18 et la plaque supérieure de coeur 20 sont ajourées pour permettre la circulation du fluide de refroidissement au travers de celles-ci. La plaque support 22 ferme l'extrémité supérieure de l'enveloppe de coeur 16.

Le coeur de réacteur 6 comprend un ensemble d'assemblages de combustible 26 de forme prismatique allongée, disposés verticalement à l'intérieur de l'enveloppe de coeur 6, entre la plaque inférieure de coeur 18, qui les supportent, et la plaque supérieure de coeur 20, qui les retient.

En fonctionnement, le fluide de refroidissement amené par la tubulure d'entrée 10A circule axialement vers le bas dans l'espace intermédiaire 24, puis remonte axialement vers le haut à l'intérieur de l'enveloppe de coeur 16 en traversant successivement la plaque inférieure de coeur 18, le coeur de réacteur 4 et la plaque supérieure de coeur 20, puis ressort par la tubulure de sortie 10B.

Les équipements internes 8 comprennent des guides de grappe 28 s'étendant verticalement entre la plaque supérieure de coeur 20 et la plaque support 22 et traversant la plaque support 22 et se prolongeant au-dessus de celle-ci.

Les équipements internes 8 comprennent des mécanismes de grappe 30 s'étendant verticalement vers le haut à partir des guides de grappe 28 et traversant le couvercle 12, pour commander le déplacement des grappes de commande depuis l'extérieur de la cuve 4.

Les équipements internes 8 comprennent des colonnes entretoises 32 s'étendant entre la plaque supérieure de coeur 20 et la plaque support 22 pour maintenir leur écartement.

Les équipements internes 8 comprennent des dispositifs de guidage 36 pour l'insertion de thermocouples à l'intérieur de la cuve 4, jusqu'au coeur de réacteur 6, pour mesurer la température du fluide de refroidissement en sortie des assemblages de combustible 26.

Chaque dispositif de guidage 36 permet de guider un ou plusieurs thermocouples au travers du couvercle 12 et de la plaque support 22, jusqu'à la plaque supérieure de coeur 20.

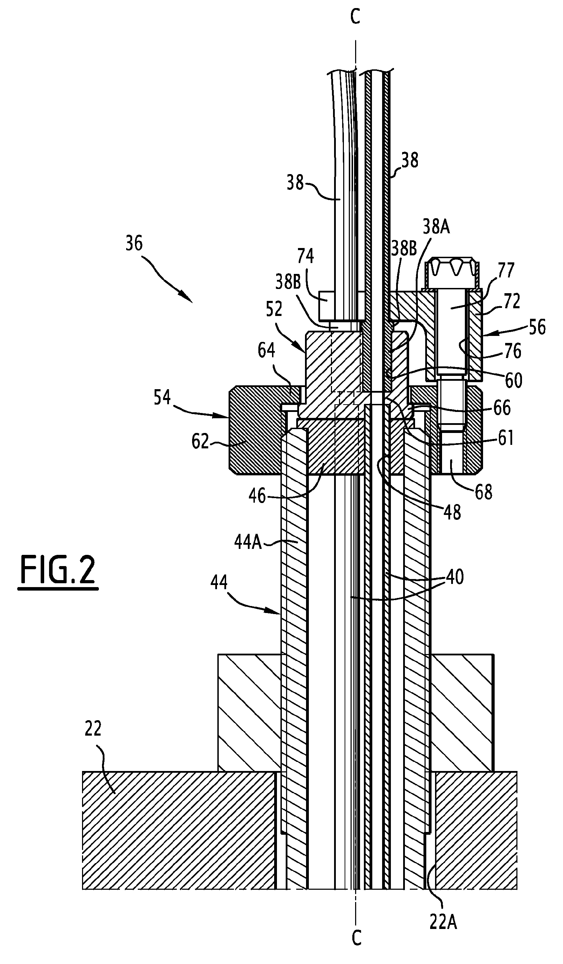

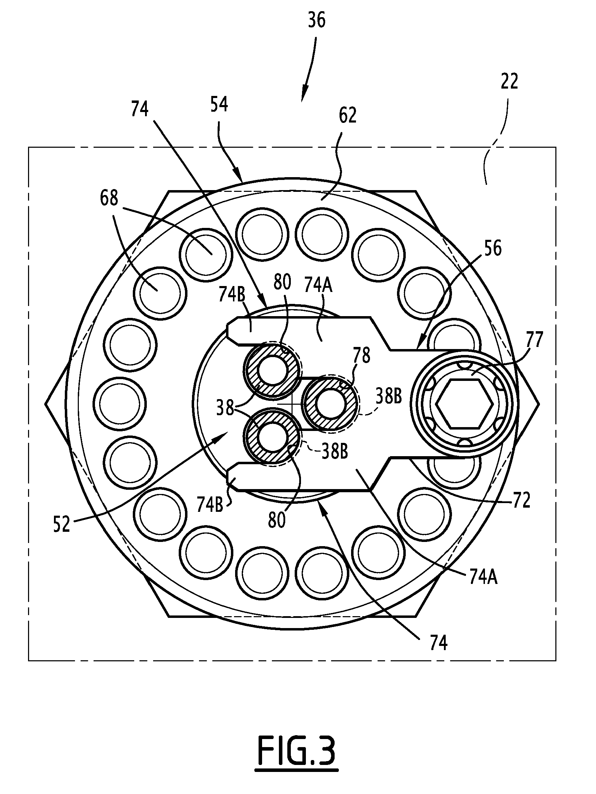

Les dispositifs de guidage 36 sont similaires. Un dispositif de guidage 36 va maintenant être décrit plus en détail en référence aux Figures 2 et 3.

Comme illustré sur la Figure 2, le dispositif de guidage 36 comprend au moins un premier conduit ou conduit de guidage supérieur 38 et au moins un deuxième conduit ou conduit de guidage inférieur 40, et un dispositif de raccordement 42 raccordant chaque conduit de guidage supérieur 38 à un conduit de guidage inférieur 40 respectif.

Dans l'exemple illustré, le dispositif de guidage 36 comprend trois conduits de guidage supérieurs 38 et trois conduits de guidage inférieurs 40 correspondants raccordés deux à deux.

Chaque conduit de guidage supérieur 38 s'étend au-dessus de la plaque support 22, entre le couvercle 12 et la plaque support 22. Chaque conduit de guidage inférieur 40 s'étend au-dessous de la plaque support 22, entre la plaque support 22 et la plaque supérieure de coeur 20. Chaque conduit de guidage supérieur 38 est raccordé à un conduit de guidage inférieur 40 au travers de la plaque support 22.

Le dispositif de raccordement 42 comprend un tube 44 s'étendant suivant un axe de tube C-C. Le tube 44 traverse la plaque support 22 et comprend une extrémité 44A filetée faisant saillie de la plaque support 22 vers le haut. Le tube 44 traverse une ouverture 22A de la plaque support 22. Le tube 44 peut être une colonne entretoise tubulaire.

Le dispositif de raccordement 42 comprend un bouchon 46 fermant l'extrémité 44A du tube 44. Les conduits de guidage inférieurs 40 s'étendent axialement à l'intérieur du tube 44 et débouchent à l'extérieur du tube 44 en traversant le bouchon 46. Chaque conduit de guidage inférieur 40 comprend une extrémité de raccordement 40A faisait saillie du bouchon 46 à l'extérieur du tube 44.

Le bouchon 46 est muni de trous de passage 48 axiaux traversant le bouchon 46. Chaque conduit de guidage inférieur 40 s'étend dans un trou de passage 48 respectif. Le bouchon 46 comprend un trou de passage 48 respectif pour chaque conduit de guidage inférieur 40.

Le bouchon 46 est disposé à l'extrémité 44A du tube 44 en étant indexé en rotation autour de l'axe de tube C-C par rapport au tube 44. De préférence, le bouchon 46 est fixé immobile sur l'extrémité 44A du tube. Le bouchon 46 est par exemple emmanché à force dans l'extrémité 44A du tube 44 et/ou soudé sur celle-ci.

Chaque conduit de guidage inférieur 40 est excentré par rapport à l'axe de tube C-C. Dans l'exemple illustré, les conduits de guidage inférieurs 40 au nombre de trois sont répartis angulairement uniformément autour de l'axe de tube C-C à 120°. Ils sont disposés aux sommets d'un triangle isocèle imaginaire centré sur l'axe de tube C-C.

Le dispositif de raccordement 42 comprend une pièce de raccordement 52 disposée à l'extrémité 44A du tube 44, un écrou de maintien 54 pour maintenir la pièce de raccordement 52 solidaire de l'extrémité 44A du tube 44, et un organe de retenue 56 fixé sur l'écrou 54 et prévu pour retenir axialement les conduits de guidage supérieurs 40 emboîtés dans la pièce de raccordement 52 et pour coopérer avec les conduits de guidage supérieurs 40 pour s'opposer au dévissage de l'écrou de maintien 54.

La pièce de raccordement 52 s'étend suivant l'axe de tube C-C et comprend des orifices 60 traversant axialement la pièce de raccordement 58.

Chaque orifice 60 est excentré par rapport à l'axe de tube C-C. Dans l'exemple illustré, les orifices 60 sont au nombre de trois est répartis angulairement uniformément autour de l'axe de tube C-C à 120°. Ils sont disposés aux sommets d'un triangle isocèle imaginaire centré sur l'axe de tube C-C.

Chaque conduit de guidage supérieur 38 a une extrémité de raccordement 38A emboîtée dans un orifice 60 respectif, à l'extrémité de l'orifice 60 opposée au tube 44.

Chaque conduit de guidage inférieur 40 a son extrémité de raccordement 40A faisant saillie du bouchon 46 emboîtée dans un orifice 60 respectif, à l'extrémité de l'orifice 60 adjacente au tube 44.

Ainsi, chaque conduit de guidage supérieur 38 est raccordé à un conduit de guidage inférieur 40 respectif dans un orifice 60 de la pièce de raccordement 52.

Dans chaque orifice 60, les extrémités de raccordement 38A, 40A du conduit de guidage supérieur 38 et du conduit de guidage inférieur 40 emboîtés dans l'orifice 60 viennent en appui axial contre des épaulements radiaux définis à l'intérieur de l'orifice 60 par une nervure annulaire 61 formant un étranglement dans l'orifice 60.

La pièce de raccordement 52 est indexée en rotation autour de l'axe de tube C-C par rapport au tube 44.

Chaque conduit de guidage inférieur 40 est fixe par rapport au tube 44. Chaque conduit de guidage inférieur 40 emboîté dans un orifice 60 excentré indexe la pièce de raccordement 52 angulairement autour de l'axe de tube C-C par rapport au tube 44.

L'écrou de maintien 54 est vissé sur l'extrémité 44A du tube 44. L'écrou de maintien 54 comprend un corps d'écrou 62 annulaire taraudé comprenant un filetage interne complémentaire du filetage externe de l'extrémité 44A du tube 44.

L'écrou de maintien 54 maintient la pièce de raccordement 52 axialement contre l'extrémité 44A du tube 40.

Pour ce faire, l'écrou de maintien 54 comprend un rebord interne 64 faisant saillie radialement vers l'intérieur à partir du corps d'écrou 62 et venant en prise axialement avec une collerette de maintien 66 de la pièce de raccordement 52 faisant saillie radialement vers l'extérieur.

L'écrou de maintien 54 comprend au moins un trou de fixation 68 taraudé s'étendant axialement à l'intérieur du corps d'écrou 62, de préférence plusieurs trous de fixation 68 répartis angulairement autour de l'axe de tube C-C.

L'organe de retenue 56 comprend une fourche 70 possédant une base 72 s'étendant axialement et deux bras 74 s'étendant transversalement à partir de la base 72. La base 72 est tubulaire et munie d'un alésage 76

La base 72 est fixée sur le corps d'écrou 62 à l'aide d'une vis 77 traversant axialement l'alésage 76 de la base 72 et vissée dans un trou de fixation 68 du corps d'écrou 62.

La base 72 est fixée sur le corps d'écrou 62 excentrée par rapport à l'axe de tube C-C et est orientée de manière que les bras 74 s'étendent à partir de la base 72 radialement vers l'intérieur par rapport à l'axe de tube C-C.

Les deux bras 74 passent au-dessus de la pièce de raccordement 52 qui se situe ainsi axialement suivant l'axe de tube C-C entre l'extrémité 44A du tube 44 et les bras 74.

Comme illustré sur la Figure 3, en vue axiale, les deux bras 74 s'étendent de part et d'autre des conduits de guidage supérieurs 42. Les conduits de guidage supérieurs 42, ici au nombre de trois, sont reçus, et passent, entre les bras 74.

Les bras 74 viennent en prise axialement avec les conduits de guidage supérieurs 38 emboîtés dans les orifices 60 pour s'opposer à une extraction des conduits de guidage supérieurs 38 des orifices 60 de la pièce de raccordement 52.

Pour ce faire, chaque conduit de guidage supérieur 38 comprend une collerette de maintien 38B annulaire en saillie radialement vers l'extérieur. Les bras 74 sont en prise axialement avec les collerettes de maintien 38B des conduits de guidage supérieurs 38.

Chaque bras 74 comprend une portion proximale 74A proche de la base 72 et une portion distale 74B éloignée de la base 72.

Un conduit de guidage supérieur 38 est reçu dans une première encoche 78 définie dans le fond de la fourche 70 entre les bras 74 et est retenu axialement par les portions proximales 74A des bras 74. L'encoche 78 présente, en vue axiale, un profil en arc de cercle, ici en demi-cercle, épousant la surface externe du conduit de guidage supérieur 38.

Chacun des deux autres conduits de guidage supérieur 38 est retenu axialement par la portion distale 74B d'un bras 74 respectif. Chaque portion distale 74B comprend une deuxième encoche 80 de réception du conduit de guidage supérieur 38 présentant en vue axiale un profil en arc de cercle épousant la surface externe du conduit de guidage supérieur 38, de préférence un profil en quart de cercle.

L'organe de retenue 56 coopère avec les conduits de guidage supérieurs 38 de manière à s'opposer au dévissage de l'écrou de maintien 54.

Un mouvement de rotation de l'écrou de maintien 54 autour de l'axe de colonne C-C dans le sens d'un dévissage (Flèche D sur la Figure 3) entraîne un mouvement de révolution de l'organe de retenue 56 autour de l'axe de tube C-C qui est empêcher par les bras 74 en prise avec les conduits de guidage supérieurs 38. On notera que l'organe de retenue 56 s'oppose également à un vissage supplémentaire de l'écrou 54.

Le dispositif de guidage 36 forme un ensemble facile à assembler, en particulier à distance, sous eau, à l'aide de perches, sans nécessiter de vider l'eau du réacteur.

Le bouchon 46 et les conduits de guidage inférieurs 40 sont fixés à demeure à l'intérieur du tube 44. Les conduits de guidage supérieurs 38 sont raccordés facilement en installant la pièce de raccordement 52 à l'extrémité 44A du tube 44, puis en vissant l'écrou de maintien 54 sur ladite extrémité 44A pour retenir axialement la pièce de raccordement 52, puis en emboîtant les conduits de guidage supérieurs 38 dans les orifices 60, puis en fixant l'organe de retenue 56 de manière qu'il maintienne les conduits de guidage supérieurs 38 emboîté dans les orifices 60 et s'oppose au dévissage de l'écrou de maintien 54 par coopération avec les conduits de guidage supérieurs 38.

Le dispositif de guidage 36 forme un ensemble fiable, notamment grâce à l'organe de retenu permettant de retenir les conduits de guidage supérieur emboîté dans la pièce de raccordement 52, et en outre s'oppose au dévissage de l'écrou 54 en coopérant à cet effet avec les conduits de guidage supérieur 38.

Le dispositif de guidage 36 forme un ensemble constitué de pièces simples faciles à fabriquer.

Dans le mode de réalisation des Figures 2 et 3, le tube 44 est une colonne entretoise, les premiers conduits (conduits supérieurs de guidage) étant raccordés par le dispositif de raccordement 50 aux deuxièmes conduits (conduits inférieurs de guidage) à une extrémité axiale de la colonne entretoise. En variante, le tube est un tube de piquage spécifique traversant la plaque support 22 sans constituer une colonne entretoise.

L'invention n'est pas limitée à un dispositif de guidage de thermocouples de réacteur nucléaire. De manière plus générale, l'invention concerne un ensemble comprenant au moins un premier conduit et un deuxième conduit et un dispositif de raccordement du premier conduit au deuxième conduit selon l'invention.

## Revendications

1. Dispositif de raccordement d'au moins un premier conduit (38) et un deuxième conduit (40), le dispositif de raccordement comprenant :
- un tube (44) fileté extérieurement s'étendant suivant un axe de tube (C-C), destiné à recevoir un deuxième conduit (40) s'étendant à l'intérieur du tube (44) ;
- une pièce de raccordement (52) fixée à une extrémité (44A) du tube (44), la pièce de raccordement (52) s'étendant suivant l'axe du tube (C-C) et étant indexée angulairement par rapport au tube (44), la pièce de raccordement (52) comprenant un orifice (60) traversant axialement la pièce de raccordement (52) ; et
- un écrou de maintien (54) vissé sur le tube (44) et maintenant axialement la pièce de raccordement (52) par rapport au tube (44), l'écrou de maintien (54) comprenant un corps d'écrou (62) annulaire taraudé ;
**caractérisé en ce qu'**il comprend :
- un organe de retenue (56) fixé sur le corps d'écrou (62) et configuré pour venir en prise avec un premier conduit (38) emboîté dans l'orifice (60) de manière à retenir axialement le premier conduit (38) emboîté dans l'orifice (60), l'organe de retenue (56) coopérant avec le premier conduit (38) de manière à s'opposer au dévissage de l'écrou de maintien (54).

2. Dispositif de raccordement selon la revendication 1, dans lequel l'orifice (60) est excentré par rapport à l'axe de tube (C-C).

3. Dispositif de raccordement selon la revendication 1 ou 2, dans lequel l'orifice (60) est prévu pour emboîter le deuxième conduit (40) dans l'orifice (60), le premier conduit (38) et le deuxième conduit (40) étant emboîtés chacun à une extrémité respective de l'orifice (60).

4. Dispositif de raccordement selon l'une quelconque des revendications précédentes, comprenant un bouchon (46) fermant le tube (44), le bouchon (46) comprenant un trou de passage (48) pour que le deuxième conduit (40) traverse axialement le bouchon (46) en étant excentré par rapport à l'axe du tube (C-C).

5. Dispositif de raccordement selon l'une quelconque des revendications précédentes, pour plusieurs premiers conduits (38) et plusieurs deuxièmes conduits (40), la pièce de raccordement (52) comprenant un orifice (60) respectif pour chaque premier conduit (38), chaque orifice (50) étant excentré par rapport à l'axe de tube (C-C).

6. Dispositif de raccordement selon la revendication 5, pour le raccordement de trois premiers conduits (38), comprenant trois orifices (60) qui, en vue axiale, sont répartis angulairement uniformément autour de l'axe de tube (C-C).

7. Dispositif de raccordement selon l'une quelconque des revendications précédentes, dans lequel l'organe de retenue (56) est fixé, par exemple par vissage, dans un trou de fixation ménagé dans le corps d'écrou (62).

8. Dispositif de raccordement selon la revendication 7, dans lequel le corps d'écrou (62) comprend plusieurs trous de fixation répartis angulairement.

9. Dispositif de raccordement selon l'une quelconque des revendications précédentes, dans lequel l'organe de retenue (56) comprend une base (72) fixée sur le corps d'écrou (62) et au moins un bras (74) s'étendant à partir de la base (72) radialement vers l'intérieur par rapport à l'axe de tube (C-C) pour venir en prise avec le premier conduit (38) de manière à le retenir axialement et à coopérer avec le premier conduit (38) de manière à s'opposer au dévissage de l'écrou de retenue (56).

10. Dispositif de raccordement selon la revendication 9, dans lequel l'organe de retenue comprend deux bras (74).

11. Dispositif de raccordement selon la revendication 10, dans lequel les bras (74) sont prévus pour passer, en vue axiale, de part et d'autre du ou de chaque premier conduit (38), le ou chaque premier conduit étant reçu entre les deux bras (74).

12. Ensemble comprenant au moins un premier conduit (38) et un deuxième conduit (40) raccordés mutuellement par un dispositif de raccordement (42) selon l'une quelconque des revendications précédentes, l'ensemble comprenant un premier conduit (38) emboîté dans un orifice (60) et un deuxième conduit (40) s'étendant à l'intérieur du tube (44), l'organe de retenue (56) venant en prise avec le premier conduit (38) de manière à retenir axialement le premier conduit (38) emboîté dans l'orifice (60), l'organe de retenue (56) coopérant avec le premier conduit (38) de manière à s'opposer au dévissage de l'écrou de maintien (54).

13. Ensemble selon la revendication 12, dans lequel le premier conduit (38) comprend une collerette (38B) faisant saillie radialement vers l'extérieur, l'organe de retenue coopérant avec la collerette (38B) pour retenir axialement le premier conduit (38) emboîté dans l'orifice (60).

14. Ensemble selon la revendication 12 ou 13, formant un dispositif de guidage de thermocouple d'un réacteur nucléaire, chaque conduit définissant un conduit de guidage de thermocouple.

15. Ensemble selon l'une quelconque des revendications 12 à 14, dans lequel le tube est une colonne entretoise d'un réacteur nucléaire.

16. Réacteur nucléaire comprenant un ensemble selon l'une quelconque des revendications 12 à 15.

## Patentansprüche

1. Vorrichtung zur Verbindung wenigstens einer ersten Rohrleitung (38) und einer zweiten Rohrleitung (40), wobei die Verbindungsvorrichtung aufweist:
- ein Rohr (44), welches ein Außengewinde hat, das sich entlang einer Rohrachse (C-C) erstreckt, und welches dazu bestimmt ist, eine zweite Rohrleitung (40) aufzunehmen, die sich im Inneren des Rohrs (44) erstreckt,
- ein Verbindungsstück (52), welches an einem Ende (44A) des Rohrs (44) befestigt ist, wobei sich das Verbindungsstück (52) entlang der Rohrachse (C-C) erstreckt und bezüglich des Rohrs (44) winkelindexiert ist, wobei das Verbindungsstück (52) eine Öffnung (60) aufweist, die das Verbindungsstück (52) axial durchdringt, und
eine Haltemutter (54), die auf das Rohr (44) geschraubt ist und die das Verbindungsstück (52) bezüglich des Rohrs (44) axial hält, wobei die Haltemutter (54) einen ringförmigen Mutterkörper (62) aufweist, in den ein Gewinde geschnitten ist,
**dadurch gekennzeichnet, dass** sie aufweist
ein Halteelement (56), das an dem Mutterkörper (62) befestigt ist und eingerichtet ist, um mit einer ersten Rohrleitung (38), die in die Öffnung (60) eingesetzt ist, in Eingriff zu kommen in der Weise, um die in die Öffnung (60) eingesetzte erste Rohrleitung (38) axial zu halten, wobei das Halteelement (56) mit der ersten Rohrleitung (38) in der Weise zusammenwirkt, um einem Losschrauben der Haltemutter (54) entgegenzuwirken.

2. Verbindungsvorrichtung gemäß Anspruch 1, wobei die Öffnung (60) bezüglich der Rohrachse (C-C) exzentrisch ist.

3. Verbindungsvorrichtung gemäß Anspruch 1 oder 2, wobei die Öffnung (60) vorgesehen ist zum Einsetzen der zweiten Rohrleitung (40) in die Öffnung (60), wobei die erste Rohrleitung (38) und die zweite Rohrleitung (40) jeweils in ein jeweiliges Ende der Öffnung (60) eingesetzt sind.

4. Verbindungsvorrichtung gemäß irgendeinem der vorhergehenden Ansprüche, aufweisend einen Stopfen (46), der das Rohr (44) schließt, wobei der Stopfen (46) ein Durchgangsloch (48) aufweist, um es der zweiten Rohrleitung (40) zu erlauben, exzentrisch bezüglich der Rohrachse (C-C) seiend, den Stopfen (46) axial zu durchdringen.

5. Verbindungsvorrichtung gemäß irgendeinem der vorhergehenden Ansprüche, für mehrere erste Rohrleitungen (38) und mehrere zweite Rohrleitungen (40), wobei das Verbindungsstück (52) eine Öffnung (60) jeweilig für jede erste Rohrleitung (38) aufweist, wobei jede Öffnung (50) bezüglich der Rohrachse (C-C) exzentrisch ist.

6. Verbindungsvorrichtung gemäß Anspruch 5, zur Verbindung von drei ersten Rohrleitungen (38), aufweisend drei Öffnungen (60), die, in Axialansicht gesehen, gleichmäßig um die Rohrachse (C-C) herum winkelverteilt sind.

7. Verbindungsvorrichtung gemäß irgendeinem der vorhergehenden Ansprüche, wobei das Halteelement (56), zum Beispiel mittels Verschraubung, in einem Befestigungsloch befestigt ist, das in dem Mutterkörper (62) ausgebildet ist.

8. Verbindungsvorrichtung gemäß Anspruch 7, wobei der Mutterkörper (62) mehrere Befestigungslöcher aufweist, die winkelverteilt sind.

9. Verbindungsvorrichtung gemäß irgendeinem der vorhergehenden Ansprüche, wobei das Halteelement (56) aufweist eine Basis (72), die an dem Mutterkörper (62) befestigt ist, und wenigstens einen Arm (74), der sich ausgehend von der Basis (72) bezüglich der Rohrachse (C-C) radial nach innen erstreckt, um mit der ersten Rohrleitung (38) in Eingriff zu kommen in der Weise, um sie axial zu Halten und um mit der ersten Rohrleitung (38) zusammenzuwirken in der Weise, um einem Losschrauben der Haltemutter (56) entgegenzuwirken.

10. Vorrichtung gemäß Anspruch 9, wobei das Halteelement zwei Arme (74) aufweist.

11. Vorrichtung gemäß Anspruch 10, wobei die Arme (74) vorgesehen sind, um, in Axialansicht gesehen, beidseits der oder jeder ersten Rohrleitung (38) die oder jede erste Rohrleitung zu passieren, die zwischen den beiden Armen (74) aufgenommen ist.

12. Einrichtung mit wenigstens einer ersten Rohrleitung (38) und einer zweiten Rohrleitung (40), die mittels einer Verbindungsvorrichtung (42) gemäß irgendeinem der vorhergehenden Ansprüche miteinander verbunden sind, wobei die Einrichtung aufweist eine erste Rohrleitung (38), die in eine Öffnung (60) eingesetzt ist, und eine zweite Rohrleitung (40), die sich im Innern des Rohrs (44) erstreckt, wobei das Halteelement (56) im Eingriff mit der ersten Rohrleitung (38) ist in der Weise, um die erste Rohrleitung (38), die in die Öffnung (60) eingesetzt ist, axial zu halten, wobei das Haltelement (56) mit der ersten Rohrleitung (38) zusammenwirkt in der Weise, um einem Losschrauben der Haltemutter (54) entgegenzuwirken.

13. Einrichtung gemäß Anspruch 12, wobei die erste Rohrleitung (38) einen Kragen (38B) aufweist, der radial nach außen hin vorsteht, wobei das Halteelement mit dem Kragen (38B) zusammenwirkt zum axialen Halten der ersten Rohrleitung (38), die in die Öffnung (60) eingesetzt ist.

14. Einrichtung gemäß Anspruch 12 oder 13, bildend eine Vorrichtung zur Thermoelementführung eines Nuklearreaktors, wobei jede Rohrleitung eine Thermoelementführungsrohrleitung definiert.

15. Einrichtung gemäß irgendeinem der Ansprüche 12 bis 14, wobei das Rohr eine Distanzsäule eines Nuklearreaktors ist.

16. Nuklearreaktor mit einer Einrichtung gemäß irgendeinem der Ansprüche 12 bis 15.

## Claims

1. A device (42) for connecting at least one first conduit (38) and one second conduit (40), the connecting device (42) comprising:
- an exteriorly threaded tube (44) extending along a tube axis (C-C), for receiving a second conduit (40) extending inside the tube (44);
- a connecting part (52) attached to one end (44A) of the tube (44), the connecting part (52) extending along the axis of the tube (C-C) and being angularly indexed relatively to the tube (44), the connecting part (52) comprising an orifice (60) which axially passes through the connecting part (52);
- a holding nut (54) screwed onto the tube (44) and axially holding the connecting part (52) relatively to the tube (44), the holding nut (54) comprising a tapped annular nut body (62); and
- a retaining member (56) attached on the nut body (62) and configured for engaging with a first conduit (38) fitted into the orifice (60) so as to axially retain the first conduit (38) fitted into the orifice (60), the retaining member (56) cooperating with the first conduit (38) so as to oppose the unscrewing of the holding nut (54).

2. The connecting device according to claim 1, wherein the orifice (60) is off-centered relatively to the tube axis (C-C).

3. The connecting device according to claim 1 or 2, wherein the orifice (60) is configured for fitting the second conduit (40) into the orifice (60), the first conduit (38) and the second conduit (40) being each fitted at one respective end of the orifice (60).

4. The connecting device according to any of the preceding claims, comprising a plug (46) closing the tube (44), the plug (46) comprising a passage hole (48) for the second conduit (40) to axially pass through the plug (46) while being off-centered relatively to the axis of the tube (C-C).

5. The connecting device according to any of the preceding claims, for several first conduits (38) and several second conduits (40), the connecting part (52) comprising a respective orifice (60) for each first conduit (38), each orifice (50) being off-centered relatively to the tube axis (C-C).

6. The connecting device according to claim 5, for the connection of three first conduits (38), comprising three orifices (60) which, in an axial view, are angularly distributed uniformly around the tube axis (C-C).

7. The connecting device according to any of the preceding claims, wherein the retaining member (56) is set, for example by screwing, in an attachment hole made in the nut body (62).

8. The connecting device according to claim 7, wherein the nut body (62) comprises several angularly distributed attachment holes.

9. The connecting device according to any of the preceding claims, wherein the retaining member (56) comprises a base (72) attached on the nut body (62) and at least one arm (74) extending from the base (72) radially inwards relatively to the tube axis (C-C) for engaging with the first conduit (38) so as to axially retain it and to cooperate with the first conduit (38) so as to oppose the unscrewing of the retaining nut (56).

10. The connecting device according to claim 9, wherein the retaining member comprises two arms (74).

11. The connecting device according to claim 10, wherein the arms (74) are configured for passing, in an axial view, on either side of said or each first conduit (38), said or each first conduit being received between both arms (74).

12. An assembly comprising at least one first conduit (38) and one second conduit (40) mutually connected by a connecting device according to any of the preceding claims, the assembly comprising a first conduit (38) fitted into an orifice (60) and a second conduit (40) extending inside the tube (44), the retaining member (56) engaging with the first conduit (38) fitted into the orifice (60) so as to axially retain the first conduit (38) fitted into the orifice (60), the retaining member (56) cooperating with the first conduit (38) so as to oppose the unscrewing of the holding nut (54).

13. The assembly according to claim 12, wherein the first conduit (38) comprises a flange (38B) protruding radially outwards, the retaining member cooperating with the flange (38B) for axially retaining the first conduit (38) fitted into the orifice (60).

14. The assembly according to claim 12 or 13, forming a thermocouple guiding device for a nuclear reactor, each conduit defining a thermocouple guiding conduit.

15. The assembly according to any of claims 12 - 14, wherein the tube is a spacer column of a nuclear reactor.

16. A nuclear reactor comprising an assembly according to any of claims 12 - 15.
